Europäisches Patentamt

European Patent Office

Office européen des brevets

(11) Publication number: **0 513 392 A1**

## EUROPEAN PATENT APPLICATION
### published in accordance with Art. 158(3) EPC

(21) Application number: **91920825.6**

(22) Date of filing: **29.11.91**

(86) International application number:
**PCT/JP91/01643**

(87) International publication number:
**WO 92/09358 (11.06.92 92/13)**

(51) Int. Cl.5: **B01D 69/10, B01D 63/08**

(30) Priority: **30.11.90 JP 334453/90**

(43) Date of publication of application:
**19.11.92 Bulletin 92/47**

(84) Designated Contracting States:
**DE FR GB**

(71) Applicant: **DAICEL CHEMICAL INDUSTRIES, LTD.**
**No. 1-Banchi, Teppo-cho**
**Sakai-shi Osaka-fu 590(JP)**

(72) Inventor: **ISHII, Kiyoshi**
**500, Kamiyobe, Yobe-ku**
**Himeji-shi, Hyogo 671-12(JP)**

(74) Representative: **Patentanwälte Grünecker, Kinkeldey, Stockmair & Partner**
**Maximilianstrasse 58**
**W-8000 München 22(DE)**

(54) **FLAT SHEET TYPE SEPARATING FILM LEAF.**

(57) A flat sheet type separating film leaf and a flat sheet type separating film element comprising the separating film leaf as a constituent element, wherein the leaf comprises a flat sheet type film support member consisting of an inner layer formed of a coarse construction and a surface layer formed of an unwoven fabric having a dense construction, the surface layer being formed integrally on both sides of the inner layer, and a semipermeable membrane covering both surfaces of the support member, in which polymer comprising the semipermeable membrane penetrates into gaps of the unwoven fabric on the surface of the support member to be combined therewith. This leaf can perform reverse osmosis cleaning on application of a low pressure.

Figure 1

[Field of the Invention]

The present invention relates to a flexible, flat separation membrane leaf which can be cleaned by back permeation and used in the technology of membrane separation of liquid, such as reverse osmosis, ultrafiltration and microfiltration, and in the technology of membrane separation of gas and also relates to a separation membrane element.

[Background of the Invention]

One of serioust problems in the technology of membrane separation of liquid is that the suspended solids, colloids, high-molecular solutes or the like in the liquid to be treated adheres to the surface of the membrane or the inner surface of each pore in the membrane to form a resistant boundary layer or to plug the pores, thereby causing a phenomenon of degrading the separation performance of the membrane. Various methods were proposed for relieving it. Recently, a method having a remarkable effect was proposed and attracted attention. In this process, for example, the permeate is forced to permeate to back for a short time periodically in the course of the operation to wash away the foulants deposited on the surface of the membrane or the plugged pores toward the untreated liquid side (the back permeation cleaning method) [see K. Matsumoto, M. Kawahara & H. Ohya, "J. Ferment. Technol.", Vol. 66, pages 199 to 205 (1988) and Japanese Patent Laid-Open No. 114/1991].

Although this method is employed in hollow fiber separation membranes, it is practically hardly employed in flat separation membranes. This is acknowledged to be one of the advantages of the hollow fiber membrane modules over the modules of other types. Among flat separation membranes, only the membrane part of a pectination type flat membrane module, a product of Romicon (U.S.A.), appears to be cleanable by back permeation. This module comprises a laminate of rectangular, resin-treated sheets of paper arranged at intervals in such a manner that one of the long sides thereof is fixed to a water-collecting plate so that they can communicate with each other, the whole surface of the resin-treated paper being covered with a membrane. The resin-treated paper is supposed to have such a high a mechanical strength that even when the internal pressure is elevated in the cleaning by back permeation, it will be neither broken nor expanded. Therefore, it is conceivable that if the membrane is sufficiently fixed to the resin-treated paper by anchoring effect into the vacancies between the fiber of the paper, the membrane will be kept from peeling-off by the back permeation stream and the back permeation cleaning will be possible. However, this module has a defect that since the resin-treated paper used as the support has no composite structure, the lateral flow resistance in the support is high and, therefore, the size and shape thereof are restricted (refer to U.S. Patent No. 3,508,994).

The reason why the back permeation cleaning method which is employed for cleaning the hollow fibre separation membrane is scarcely employed for cleaning the flat separation membrane is as follows. Since the hollow fibre membrane per se has a pressure-resistant structure and no remarkable deformation thereof is caused by either a positive or negative pressure, the back permeation of a liquid is possible. On the contrary, even when the flat membrane is lined with a reinforcing material such as a nonwoven or woven fabric which is combined with a membrane, it per se is easily deformed under pressure and the original shape thereof before the application of the pressure cannot be kept. Under these circumstances, in the module wherein the flat membrane is used, an idea has been employed wherein the membrane is placed either on a pressure-resistant supporting plate having a passage for the permeate or on both sides of a supporting plate having a passage for the permeate, woven fabric or mesh to form a membrane leaf, thereby preventing it from being deformed by balancing the pressures on both sides (refer to U.S. Patent Nos. 3,133,132, 3,133,137 and 3,872,015).

Although the membrane leaf is capable of maintaining its original shape against the positive pressure applied to the membrane surface, the membrane is easily lifted off the supporting plate, woven fabric or the like by the negative pressure applied for the cleaning by back permeation. Therefore, the pressure of the permeate applied for the purpose of the back permeation through the membrane is first wasted for the lifting and deformation of the membrane. Since the back permeation is not started before the deformation of the membrane has been completed, a means wherein only a small amount of the permeate is subjected to back permeation by only switching valves in the course of the operation is ineffective at all and even when the permeate is subjected to back permeation by means of a pump, the efficiency is very low. Further the membrane leaf is damaged due to the repeated deformation or the like.

On the other hand, gas-separation membrane modules disclosed in U.S. Patent Nos. 2,597,907 and 3,332,216, etc., are known in the field of technology of membrane separation of gas. However, these modules also have problems of a flux decline due to very small particles such as dust and the deformation and damage of the membrane when it is thin.

To solve the problem of a flux decline, a permselective gas-separation membrane module wherein a porous covering material is applied to the surface of a gas-permeable membrane module was proposed (see Japanese Patent Laid-Open No. 199005/1983). However, it is necessary for this module to exchange the porous covering material.

Further, a permselective gas-separation membrane module, which comprises an elastic porous material having an interconnected bubble cell and a composite membrane consisting of an ultrathin permselective gas separation membrane and porous membrane, was proposed for solving the problem of the deformation and damage of the membrane (see Japanese Utility Model Publication No. 27609/1986). However, since the elastic porous material is not integral with the composite membrane, the central part of the permeable membrane might be expanded and, when it is restored to the former state by the pressure change, it wrinkles and/or breaks.

Another example of the supports having the composite structure in which no delamination occurs is a composite nonwoven fabric disclosed in Japanese Patent Laid-Open No. 238103/1985. However, this invention was made for the purpose of just preventing the strike-through of a dope which might occur when the dope is applied onto for forming the membrane. In this invention, the other undoped rear side or intermediate layer is made dense.

[Disclosure of the Invention]

The present inventors have supposed that the back permeation would be suitable for overcoming the defect of clogging of the separation membrane. After exntensive investigations on a process for integrating a separation membrane with a support in order to protect the separation membrane from deformation caused by back permeation, the inventors have found that this problem can be solved by combining the separation membrane with a flat membrane support having a specified multilayer structure. The present invention has been completed on the basis of this finding.

Namely, the present invention provides a flat separation membrane leaf characterized by consisting of a flat membrane support comprising an inner layer having a coarse structure having large voids and surface layers comprising a nonwoven fabric having a dense structure made of fine fibers and having small openings, said surface layers being partially adhered to the both sides of the inner layer with an adhesive or heat-fused so as to be integrated with the inner layer, and semipermeable membranes coating both sides of the support in such a manner that the polymer constituting the semipermeable membranes penetrates into the openings of the nonwoven fabrics of the surfaces of the support to combine the semipermeable membranes with the surfaces of the support.

The present invention provides also a flat separation membrane leaf characterized by consisting of a flat membrane support made of a nonwoven fabric and comprising an inner layer having a coarse structure having large voids and surface layers having a dense structure and small openings, wherein the density is gradually increased in the direction from the inner layer toward the surface layers, and semipermeable membranes coating both sides of the support in such a manner that the polymer constituting the semipermeable membranes penetrates into the openings of the nonwoven fabrics of the surfaces of the support to combine the semipermeable membranes with the surfaces of the support.

The present invention further provides a flat separation membrane element containing the above-described flat separation membrane leaf as the essential component.

A detailed description will now be made on the present invention.

The flat membrane support constituting the flexible, flat separation membrane leaf in the first embodiment of the present invention comprises an inner layer having a coarse structure having large voids and interposed between surface layers comprising a nonwoven fabric having a dense structure made of fine fibers and having small openings to form an integral structure. Therefore, the support essentially has a three-layered structure consisting of one inner layer and two surface layers. However, since it will suffice when the inner layer has a structure coarser than that of the surface layer, a multi-layered structure comprising layers laminated so that openings gradually increase with the thickness of the fibre diameter in the direction from the surface layer toward the inside may be employed in place of the above-described structure.

The support need not have layers of similar structures over the whole thickness thereof. Therefore, though the surface layers of the support are made of a nonwoven fabric, the inner layer of the support may also be made of a woven fabric having a high void volume, such as a tricot or pile fabric, or a mesh screen beside a nonwoven fabric having a coarse structure made of thick fibers and having large openings. Further it may be a net-shaped molding prepared by the melt extrusion of a thermoplastic polymer into filaments.

When the woven fabric is used for forming the inner layer, it is preferably made of monofilaments having a large diameter. The inner layer is preferably after-treated with a resin so as to keep the structure with the low level of the water-flow resistance against the pressure applied to the membrane surface. The after-treatment with a resin can be conducted by, for example, immersing the woven fabric in a solution of the polymer or its precursor, draining it to remove superfluous solution, drying it and subjecting it to polycondensation and/or crosslinking reaction to form a thin coating film of the polymer thereon. Examples of the coating polymers include polyvinyl alcohol, polyacrylates, melamine resin and modified urea resins.

The flat membrane support constituting the flat separation membrane leaf in the first embodiment of the present invention comprises the above-described inner layer integrated with the surface layers. When the support has a laminated multi-layered structure, the integration may be conducted by heat treatment through heating rolls or by joining the layers with each other by an adhesive or the like at many joints located at such intervals that no inflation is caused by the back pressure. The spaces between the joints serve as the passages for the permeated liquid or concentrated gas.

Examples of the material of the fiber constituting the flat membrane support in the first embodiment of the present invention include heat-fusible materials such as polyesters, polyamides and polyolefins. Even those materials which per se are difficultly heat-fused can be fused by using a hot-melt binder.

When the inner layer of the flat membrane support in the first embodiment of the present invention is a mesh screen, it is made of, for example, polyethylene, polypropylene or polyethylene terephthalate. When the inner layer is a net-shaped molding produced by the melt-extrusion of a thermoplastic polymer into filaments, the material thereof is, for example, polyethylene or polypropylene.

The adhesives usable therefor include polyurethane adhesive, epoxy adhesive, etc.

When a polyester fiber is used as the material of the nonwoven fabric in the flat membrane support in the first embodiment of the present invention, the fiber for the surface layer preferably has a thickness of 1 to 5 denier and a length of 10 to 50 mm and that for the inner layer preferably has a thickness of 5 to 50 denier and a length of 30 to 100 mm. By strongly crimping the fiber to be used for forming the inner layer, both the void volume and pressure resistance can be simultaneously improved.

When the flat membrane support in the present invention is made of a nonwoven fabric, the surface layer of the support preferably has a thickness of about 0.05 to 0.2 mm, a basis weight of about 0.5 to 1.0 g/ml and a gas permeability of about 30 to 300 $m^3/m^2 \cdot sec$ and the inner layer thereof preferably has a thickness of about 0.5 to 2.0 mm, a basis weight of about 0.2 to 0.5 g/ml and a gas permeability of about $2 \times 10^3$ to $2 \times 10^4$ $m^3/m^2 \cdot sec$ (in terms of that of a layer having a thickness of 0.1 mm).

When the inner layer is made of a woven fabric, it is preferably one similar to the nonwoven fabric. When the inner layer is made of the mesh screen or net-shaped molding, it is preferably one having an opening of about 0.5 to 3.0 mm and a filament diameter of about 0.25 to 1.0 mm.

The flat membrane support constituting the flexible, flat separation membrane leaf in the second embodiment of the present invention is made of a nonwoven fabric. The inner layer has a coarse structure having large voids and the surface layers have a dense structure having small openings, wherein the density gradually increases in the direction from the inner layer toward the surface layer.

The fiber material constituting the flat membrane support in the second embodiment of the present invention may be the same as that for the flat membrane support in the first embodiment of the present invention. The density (coarseness) of the inner layer and the density of the surface layer may also be similar to those of the flat membrane support comprising the inner layer and surface layers made of a nonwoven fabric in the first embodiment of the present invention.

The flat separation membrane leaf of the present invention has semipermeable membranes on the both sides of the above-described flat membrane support.

The semipermeable membrane is bound to the nonwoven fabric constituting the surface layer of the flat membrane support by the anchoring effect obtained since a portion thereof penetrates into the voids in the fabric.

Examples of the material of the semipermeable membrane include polyethersulfones, polysulfones, polyacrylonitriles polyamides, polyimides and cellulose esters.

The two semipermeable membranes which coat both sides of the flat membrane support may be either symmetric or asymmetric. Alternatively they may be composite membranes. Preferred examples of the semipermeable membrane include asymmetric membranes formed by the phase inversion method and composite membranes comprising an asymmetric membrane as a support layer formed by the phase inversion method.

Processes for producing the flat separation membrane leaf of the present invention are not limited. Preferred examples thereof will now be described.

First process comprises preparing the above-described inner layer and surface layers, integrating them by adhesion with an adhesive or by heat fusion through heating rolls to form the flat membrane support in the first embodiment of the present invention or, alternatively, to form the flat membrane support in the second embodiment of the present invention, casting a solution of the membrane-forming polymer on the surfaces of the membrane support and immersing the support in a suspended solidifying bath to form the semipermeable membrane parts by the so-called phase inversion method. The permselective membranes can be bonded to the support by the anchoring effect wherein the membrane-forming polymer solution penetrated into the nonwoven fabric constituting the surface layer of the support is arrested by the fibers after the gelation. The penetration depth can be suitably varied depending on the viscosity of the polymer solution, surface tension, affinity for the fiber (wettability of the fiber with the solution), size of the opening of the nonwoven fabric, pressure applied to the polymer solution in the casting step and time required for the gelation after the casting.

Examples of the solvent used for preparing a solution of the membrane-forming polymer include dimethyl sulfoxide, N-methyl-2-pyrrolidone, N,N-dimethylformamide and 1,4-dioxane. The membrane-forming polymer solution can be cast over the membrane support surface by passing the flat membrane support through two coating rolls.

Second process comprises first forming the semipermeable membrane on one side of the nonwoven fabric constituting the surface layer of the membrane support by the above-described phase inversion method to obtain the nonwoven fabric coated with the semipermeable membrane, bonding it to each side of the inner layer(s) of the membrane support so that the semipermeable membrane is positioned outside by, for example, adhesion with the adhesive at many joints in the same manner as that described above to form an integrated product.

Thus the flat separation membrane leaf having the semipermeable membrane is produced, which is preferably used as ultrafiltration membrane, microfiltration membrane, reverse osmosis membrane, gas separation membrane, pervaporation membrane, vapor permeation membrane or penetration/extraction membrane.

The flat separation membrane element of the present invention contains the above-described flat separation membrane leaf as the essential component. Other components of the element are not limited so far as the element contains the flat separation membrane leaf as the essential component.

The process for producing the flat separation membrane element is not particularly limited. For example, it can be produced by cutting the flat separation membrane leaf of the present invention into a piece of a desired shape, such as a round or square plate, sealing the periphery of the piece by heat fusion or by the application of an adhesive, providing a hole at the center of the plate, inserting a hollow tube having communicating ports through which liquid or gaseous permeate can flow in or out into the center of at least one such plate, and sealing the fitting part and the periphery of the separation membrane leaf liquid-tight or air-tight by heat fusion or by the application of an adhesive. The flat separation membrane element may be placed in a suitable case to form a separation membrane module or, alternatively, it may be immersed as it is without using any case in a liquid to be treated.

As described above, the flat separation membrane leaf of the present invention is not substantially deformed even when a liquid is forced to permeate the membrane in the direction opposite to the direction of the permeation in the step of separating an ingredient by the membrane. Further, since the integrated membrane is used, the membrane is free from wrinkles which cause breakage. Therefore, it can be cleaned by back permeation which is an effective means for recovering the performance of the membrane which was reduced by the solutes or suspended solids in the liquid to be treated or by dusts in the gas to be treated. The separation membrane leaf of the present invention can be cleaned by back permeation without impairing its essential permeation flow rate.

[Brief Description of the Drawing]

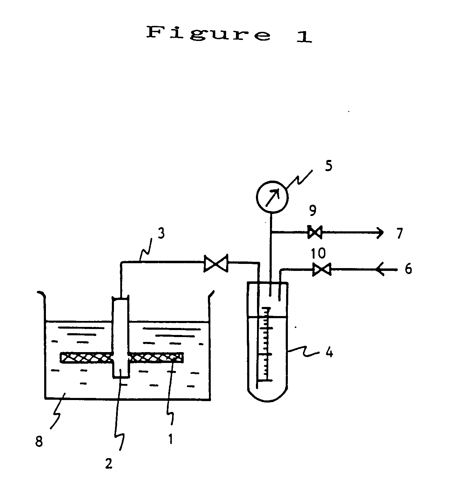

Fig. 1 is a schematic sectional view of an apparatus for measuring the pure water permeation flux of a separation membrane used in Examples given below:

1: separation membrane leaf,
2: acrylic tube,
3: pressure resistant tube,
4: trap,
5: pressure gauge,
6: nitrogen gas piping,
7: vacuum line,
8: pure water,
9: valve, and
10: valve.

[Examples]

The following Examples will further illustrate the present invention, which by no means limit the invention.

Example 1

A nonwoven fabric having a thickness of 1.5 mm, a basis weight of 0.4 g/ml and a gas permeability of 0.2 $\ell/m^2 \cdot sec$ to be used as the inner layer was prepared from mainly polyester fibers having a thickness of 10 denier and a length of 50 mm. A sheet of a single nonwoven fabric having a thickness of 0.1 mm, a basis weight of 0.8 g/ml and a gas permeability of 10 ml/cm$^2 \cdot$sec was prepared from mainly polyester fibers having a thickness of 3 denier and a length of 30 mm and superposed on both sides of the inner layer. The assembly was heated under pressure through hot rolls to form an integrated three-layered nonwoven fabric having a thickness of 1.7 mm. The nonwoven fabric was vertically put into a vessel containing a dope comprising 20% by weight of a polyether sulfone (trade name: Victrex mfd. by ICI), 20% by weight of Polyethylene Glycol 200 and 60% by weight of dimethyl sulfoxide both mfd. by Wako Pure Chemical Industries, Ltd., vertically pulled out downward through a slit having a width of 2 mm at the bottom of the vessel, and then continuously put into a water bath to form a membrane leaf in which the water level was set 20 cm below the slit. The membrane leaf was thoroughly washed with water and hot water to remove the solvent and then cut into doughnut-shaped pieces having an outer diameter of 8 cm and an inner diameter of 2 cm.

As shown in Fig. 1, an acrylic tube 2 having a diameter of 20 mm and 4 concyclic small pores having a 1-mm diameter was pierced through the doughnut-shaped separation membrane leaf 1 so that the inner layer of the doughnut-shaped separation membrane leaf 1 would communicate with the bore of the acrylic tube. Thereafter, the fitting part and the periphery of the separation membrane leaf were sealed with a polyurethane adhesive to form a separation membrane element. One end of the acrylic tube 2 was tightly stopped and the other end thereof was connected to a nitrogen gas piping 6 and a vacuum line 7 via a pressure resistant tube 3, a trap 4, a pressure gauge 5 and ball valves. The separation membrane leaf 1 of this element was immersed in pure water 8 and the valve 9 of the vacuum line was opened to determine the pure water permeation flux by measuring the elevation of the water level in the trap; the flux was 240 $\ell/m^2 \cdot h \cdot kg/cm^2$ (reduced value to 25°C). Then the valve 9 of the vacuum line was closed and the valve 10 of the nitrogen gas piping was opened to send back the permeate from the trap under a pressure of 1 kg/cm$^2$. The separation membrane leaf 1 gave a back permeation flux of 245 $\ell/m^2 \cdot h \cdot kg/cm^2$ while retaining its original shape.

Comparative Example

The sheet prepared for forming the surface layer in Example 1 was processed through hot rolls to form an ordinary nonwoven fabric. One surface of this fabric was protected by a polyethylene sheet. The polyether sulfone dope as used in Example 1 was cast over an unprotected surface of the fabric under the same conditions as those of Example 1 and the fabric thus treated was immersed in water. It was then washed with water and hot water in the same manner as that of Example 1 to obtain a flat membrane having a semipermeable membrane provided on only one surface thereof. It was mounted on a flat membrane measuring cell to determine the pure water permeation flux thereof, which was 290 $\ell/m^2 \cdot h \cdot kg/cm^2$ at reduced value to 25°C. It was cut into doughnut-shaped pieces having an outer diameter of 8 cm and an inner diameter of 2 cm (doughnut-shaped flat membrane). The flat membranes were placed on both sides of a nonwoven fabric having a thickness of 2 mm prepared from mainly a polyester fiber having a thickness of 10 denier and a length of 50 mm and the equivalent of the inner layer of the three-layered nonwoven fabric of Example 1 in such a manner that the semipermeable membrane faced outside to obtain a separation membrane leaf (without any heat press treatment). An element was prepared in the same manner as that of Example 1 by using the separation membrane leaf thus prepared. The pure water permeation flux was determined in the same manner as that described above, which was 250 $\ell/m^2 \cdot h \cdot kg/cm^2$ at reduced value to 25°C. When the permeate in the trap was sent back under a pressure of 0.1 kg/cm$^2$, the flat membrane with the semipermeable membrane increased the thickness by about 2 mm.

Example 2

A mesh screen (20-mesh, 0.68 mm thick, made of a polyester monofilament having a diameter of 0.32 mm) was superposed on a doughnut-shaped flat membrane made of the nonwoven fabric similar to that use in the above Comparative Example, the size of them being equal. A sealing polyurethane adhesive was applied to the periphery thereof and then the mesh screen was dotted with the same adhesive to form dots having a diameter of about 1 to 2 mm at intervals of about 5 mm. Immediately thereafter, another piece of the doughnut-shaped flat membrane was superposed thereon so that the nonwoven fabric faced inside. The whole was turned upside down (to face the bottom flat membrane upward). An acrylic plate of 1 cm in thickness was placed thereon and a weight of about 500 g was placed on the plate. The assembly was left to stand to cure the polyurethane adhesive. The separation membrane leaf thus prepared was hermetically bonded to an acrylic tube for taking out a permeate having an outer diameter of 20 mm with an adhesive in the same manner as that of Example 1 and Comparative Example to obtain an element. The pure water permeation flux thereof was determined to reveal that it was 240 $\ell/m^2 \cdot h \cdot kg/cm^2$. After the completion of the determination, the vacuum line was closed and the nitrogen gas line was opened to send back the permeate under a pressure of 1 kg/cm². The maximum expansion of the separation membrane leaf was below 0.3 mm and the pure water permeation flux was 250 $\ell/m^2 \cdot h \cdot kg/cm^2$.

Example 3

A net (trade name: TRICAL N3; a net of Takiron Co., Ltd. made of a high-density polyethylene and having a thickness of 0.7 mm and an opening of 1.5 x 2.0 mm) was superposed on a doughnut-shaped flat membrane made of the nonwoven fabric similar to that used in Example 2, the size of them being equal. A sealing polyurethane adhesive was applied to the periphery thereof in the same manner as that of Example 2 and then the net was dotted with the same adhesive to form dots having a diameter of about 3 mm at an interval of about 8 mm. Immediately thereafter, another piece of the doughnut-shaped flat membrane was superposed thereon so that the nonwoven fabric faced inside. The whole was turned upside down and then the polyurethane adhesive was cured in the same manner as that of Example 2. The separation membrane leaf thus prepared was hermetically bonded to an acrylic tube for taking out a permeate having an outward form of 20 mm in the same manner as that of Examples 1 and 2 and Comparative Example to obtain an element. The pure water permeation flux thereof was determined to reveal that it was 200 $\ell/m^2 h \, kgcm^{-2}$. After the completion of the determination, the vacuum line was closed and the nitrogen gas line was opened to send back the permeate under a pressure of 0.5 kg/cm². The maximum expansion of the separation membrane leaf was below 0.5 mm and the pure water permeation flux was 200 $\ell/m^2 \, h \, kgcm^{-2}$.

**Claims**

1. A flat separation membrane leaf characterized by consisting of a flat membrane support comprising an inner layer having a coarse structure having large voids and surface layers comprising a nonwoven fabric having a dense structure made of fine fibers and having small openings, said surface layers being partially adhered to both sides of the inner layer with an adhesive or heat-fused so as to be integrated with the inner layer, and semipermeable membranes coating both sides of the support in such a manner that the polymer constituting the semipermeable membranes penetrates into the openings of the nonwoven fabrics of the surfaces of the support to combine the semipermeable membranes with the surfaces of the support.

2. A flat separation membrane leaf characterized by consisting of a flat membrane support made of nonwoven fabrics and comprising an inner layer having a coarse structure having large voids and surface layers having a dense structure and small openings, wherein the density is gradually increased in the direction from the inner layer toward the surface layers, and semipermeable membranes coating both sides of the support in such a manner that the polymer constituting the semipermeable membranes penetrates into the openings of the nonwoven fabrics of the surfaces of the support to combine the semipermeable membranes with the surfaces of the support.

3. The flat separation membrane leaf according to Claim 1, wherein the inner layer is at least one layer selected from the group consisting of a nonwoven fabric made of thick fibers and having a coarse structure having large voids, a woven tricot fabric having a high void volume and made of thick fibers, a woven pile fabric having a high void volume and made of thick fibers, a mesh screen having a high void volume and a net-shaped molding prepared by the melt extrusion of a thermoplastic polymer into filaments.

4. The flat separation membrane leaf according to Claims 1 or 2, wherein the semipermeable membrane is asymmetric one prepared by the phase inversion method.

5. The flat separation membrane leaf according to Claims 1 or 2, wherein the semipermeable membrane is a composite membrane comprising, as a support layer, an asymmetric membrane prepared by the phase inversion method.

6. The flat separation membrane leaf according to Claims 1 or 2, wherein the semipermeable membrane is an ultrafiltration membrane or a microfiltration membrane.

7. The flat separation membrane leaf according to Claims 1 or 2, wherein the semipermeable membrane is a reverse osmosis membrane, gas separation membrane, pervaporation membrane, vapor permeation membrane or perstraction membrane.

8. A flat separation membrane element which comprises, as the essential component, the flat separation membrane leaf according to Claims 1 or 2.

Figure 1

# INTERNATIONAL SEARCH REPORT

International Application No  PCT/JP91/01643

**I. CLASSIFICATION OF SUBJECT MATTER** (if several classification symbols apply, indicate all) [6]

According to International Patent Classification (IPC) or to both National Classification and IPC

Int. Cl$^5$  B01D69/10, 63/08

**II. FIELDS SEARCHED**

| Minimum Documentation Searched [7] | |
|---|---|
| Classification System | Classification Symbols |
| IPC | B01D69/10, 63/08 |

Documentation Searched other than Minimum Documentation
to the Extent that such Documents are Included in the Fields Searched [8]

| | | |
|---|---|---|
| Jitsuyo Shinan Koho | 1926 | – 1990 |
| Kokai Jitsuyo Shinan Koho | 1971 | – 1990 |

**III. DOCUMENTS CONSIDERED TO BE RELEVANT** [9]

| Category [*] | Citation of Document, [11] with indication, where appropriate, of the relevant passages [12] | Relevant to Claim No. [13] |
|---|---|---|
| A | JP, A, 60-238103 (Awa Seishi K.K.), November 27, 1985 (27. 11. 85), Line 13, upper left column to line 1, lower left column, page 2 (Family: none) | 1-8 |

[*] Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| February 3, 1992 (03. 02. 92) | February 25, 1992 (25. 02. 92) |
| International Searching Authority | Signature of Authorized Officer |
| Japanese Patent Office | |

Form PCT/ISA/210 (second sheet) (January 1985)